# EUROPEAN PATENT APPLICATION

(11) **EP 4 810 931 A1**
(43) Date of publication of application: **23.09.2026**
(21) Application number: 25226117.7
(22) Date of filing: 22.12.2025
(51) Int. Cl.: G01M 3/24, G01M 5/00, H04R 1/40, H04R 3/00

(54) **METHOD AND SYSTEM FOR WIDEBAND BEAM FORMING BASED TARGET LOCALIZATION**

(30) Priority: 18.03.2025 IN 202521024136
(71) Applicant: Tata Consultancy Services Limited, Mumbai, Maharashtra 400 021 (IN)
(72) Inventor: RAKSHIT, Raj, 700160 Kolkata (IN); BISWAS, Mayukh, 700160 Kolkata (IN); SWAIN, Amit, 700160 Kolkata (IN); BHAUMIK, Chirabata, 700091 Kolkata (IN)
(74) Representative: Goddar, Heinz J.

(57) **Abstract**

Industrial structures are prone to external conditions resulting in leakage, faults etc. While easy-to install structure monitoring methods exist, sensor maintenance and in-situ inspection becomes arduous, if the structure is at an inaccessible location. For example, localization of leak event and the ability to differentiate leak and non-leak becomes an even more daunting challenge. Method and system disclosed herein facilitate wideband beam forming based target localization. Further to the wideband forming, the system identifies and processes a single channel audio frame from an identified microphone that is nearest to an angle of interest to generate a spatially filtered single channel audio frame. Further, the spatially filtered single channel audio frame is fused with a set of single frequency acoustic maps. Further, a target localization of an event of interest in the angle of interest is performed by fusing the spatial-spectral filtered single channel audio frame with the composite acoustic map.

## Description

### CROSS-REFERENCE TO RELATED APPLICATIONS AND PRIORITY

The present application claims priority to Indian application no. 202521024136 filed on March 18, 2025.

### TECHNICAL FIELD

The disclosure herein generally relates to real-time target localization, and, more particularly, to a method and system for wideband beam forming based target localization.

### BACKGROUND

Industrial machines, pipes, and other components are prone to external conditions resulting in leakage, faults, damage and so on. Timely and accurate localization of such events becomes important, considering its implications on economic loss, environmental concerns, and public safety. Existing methods for monitoring such structures/objects (viz. usage of pressure gauge) require an engineer to bore a sensor into the structures/objects (for example, a pipe). This renders the installation and maintenance phases cumbersome. While easy-to install monitoring and sensing method exists (viz. accelerometer), sensor maintenance and in-situ inspection becomes arduous, if the structures/objects are at an inaccessible location. Accurate localization and differentiation of such events becomes an even more daunting challenge.

### SUMMARY

Embodiments of the present disclosure present technological improvements as solutions to one or more of the above-mentioned technical problems recognized by the inventors in conventional systems. For example, in one embodiment, a processor implemented method is provided. The method includes: receiving, via a communication interface, an input data comprising a) cursor coordinates indicating a selected location in a X/Y cartesian plane, of a pipe being monitored, b) one or more N-channel signals from an N-microphone circular array of window length in seconds, c) geometry of a target, d) a selected resolution of an acoustic imaging viewport, e) a frequency range of interest, and f) a band distance; converting, via one or more hardware processors, the cursor coordinates to associated polar coordinate, based on the geometry of the target and the selected resolution of acoustic imaging, wherein the polar coordinates represent location in angles from a positive x-axis and a positive z-axis, and a distance from origin; performing, via the one or more hardware processors, a wideband beamforming based on the geometry of the target, to generate a composite acoustic map and a set of single frequency acoustic maps; identifying, via the one or more hardware processors, a microphone from among a set of microphones in a microphone array, nearest to an angle of interest derived from generated polar coordinates, wherein the identified microphone that is nearest to the angle of interest captures maximum of a sound from an event of interest in the angle of interest; processing, via the one or more hardware processors, a single channel audio frame from the identified microphone that is nearest to the angle of interest, using a light weight Delay Multiply and Sum (DMAS) algorithm, to generate a spatially filtered single channel audio frame; fusing, via the one or more hardware processors, the spatially filtered single channel audio frame with the set of single frequency acoustic maps, by frequency domain convolution of spatially filtered single channel audio frame with one or more interpolated and zero padded weightage coefficients from the single frequency acoustic maps at the cursor coordinates, to generate a spatial-spectral filtered single channel audio frame; and performing a target localization of the event of interest in the angle of interest, via the one or more hardware processors, by fusing the spatial-spectral filtered single channel audio frame with the composite acoustic map.

In an aspect of the method, performing the wideband beamforming to generate the composite acoustic map and the set of single frequency acoustic maps comprises: shortening an N-channel audio frame from the N-microphone circular array from the start of a frame to generate the updated value window length, to reduce the computation time of the wideband beamforming; increasing the narrow bandwidth of each of the one or more narrow band pass filters centered at frequencies of the set of single frequency acoustic maps, to decrease the number of narrow band pass filters without changing a frequency range of the wideband beamforming; and reducing resolution of the acoustic imaging viewport along horizontal and vertical axes, to reduce the computation time of the wideband beamforming, retaining intelligibility of the acoustic map in the viewport, wherein the updated value window length, the decreased the number of narrow band pass filters, and the reduced resolution of the acoustic imaging viewport causes the wideband beamforming.

In another aspect of the method, generating a spatially filtered single channel audio frame comprises: populating indices of k nearest microphones towards the angles of interest from the set of N microphones in the microphone array, wherein the k nearest microphones are found by projecting a unit vector directed at the angle of interest, upon a microphone array plane, scaled by a span of the microphone array; reducing an outer summation loop of the DMAS algorithm from N summations to k summations using a shortened N-channel audio frame and the reduced set of microphones k; obtain an envelope of the signal by passing the reduced outer summation loop through a Hilbert transform to remove a plurality of negative components in the signal; and generating the spatially filtered single channel audio frame based on the obtained envelope and the DMAS algorithm.

In another aspect of the method, fusing the spatially filtered single channel audio frame with the set of single frequency acoustic maps comprises: transforming the spatially filtered single channel audio frame using a fast fourier transform to obtain an audio frame in a frequency domain; extracting a plurality of weightage coefficients corresponding to M central frequencies from a set of M single frequency acoustic maps; interpolating and zero-padding the plurality of weightage coefficients to match dimensions of the audio frame in the frequency domain; and convolving the audio frame in the frequency domain and the interpolated and zero-padded plurality of weightage coefficients, by multiplication of the audio frame in the frequency domain and the interpolated and zero-padded plurality of weightage coefficients followed by application of inverse fast fourier transform, to obtain the spatial-spectral filtered single channel audio frame.

In another aspect, a system is provided. The system includes one or more hardware processors, a communication interface, and a memory storing a plurality of instructions. The plurality of instructions cause the one or more hardware processors to: receive, via the communication interface, an input data comprising a) cursor coordinates indicating a selected location in a X/Y cartesian plane, of a pipe being monitored, b) one or more N-channel signals from an N-microphone circular array of window length in seconds, c) geometry of a target, d) a selected resolution of an acoustic imaging viewport, e) a frequency range of interest, and f) a band distance; convert the cursor coordinates to associated polar coordinate, based on the geometry of the target and the selected resolution of acoustic imaging, wherein the polar coordinates represent location in angles from a positive x-axis and a positive z-axis, and a distance from origin; perform a wideband beamforming to generate a composite acoustic map and a set of single frequency acoustic maps; identify a microphone from among a set of microphones in a microphone array, nearest to an angle of interest derived from generated polar coordinates, wherein the identified microphone that is nearest to the angle of interest captures maximum of a sound from an event of interest in the angle of interest; process a single channel audio frame from the identified microphone that is nearest to the angle of interest, using a light weight Delay Multiply and Sum (DMAS) algorithm, to generate a spatially filtered single channel audio frame; fuse the spatially filtered single channel audio frame with the set of single frequency acoustic maps, by frequency domain convolution of spatially filtered single channel audio frame with one or more interpolated and zero padded weightage coefficients from the single frequency acoustic maps at the cursor coordinates, to generate a spatial-spectral filtered single channel audio frame; and perform a target localization of the event of interest in the angle of interest by fusing the spatial-spectral filtered single channel audio frame with the composite acoustic map.

In an aspect of the system, the one or more hardware processors are configured to perform the wideband beamforming to generate the composite acoustic map and the set of single frequency acoustic maps by: shortening an N-channel audio frame from the N-microphone circular array from the start of a frame to generate the updated value window length, to reduce the computation time of the wideband beamforming; increasing the narrow bandwidth of each of the one or more narrow band pass filters centered at frequencies of the set of single frequency acoustic maps, to decrease the number of narrow band pass filters without changing a frequency range of the wideband beamforming; and reducing resolution of the acoustic imaging viewport along horizontal and vertical axes, to reduce the computation time of the wideband beamforming, retaining intelligibility of the acoustic map in the viewport, wherein the updated value window length, the decreased the number of narrow band pass filters, and the reduced resolution of the acoustic imaging viewport causes the wideband beamforming.

In another aspect of the system, the one or more hardware processors are configured to generate the spatially filtered single channel audio frame by: populating indices of k nearest microphones towards the angles of interest from the set of N microphones in the microphone array, wherein the k nearest microphones are found by projecting a unit vector directed at the angle of interest, upon a microphone array plane, scaled by a span of the microphone array; reducing an outer summation loop of the DMAS algorithm from N summations to k summations using a shortened N-channel audio frame and the reduced set of microphones k; obtain an envelope of the signal by passing the reduced outer summation loop through a Hilbert transform to remove a plurality of negative components in the signal; and generating the spatially filtered single channel audio frame based on the obtained envelope and the DMAS algorithm.

In another aspect of the system, the one or more hardware processors are configured to fuse the spatially filtered single channel audio frame with the set of single frequency acoustic maps comprises: transforming the spatially filtered single channel audio frame using a fast fourier transform to obtain an audio frame in a frequency domain; extracting a plurality of weightage coefficients corresponding to M central frequencies from a set of M single frequency acoustic maps; interpolating and zero-padding the plurality of weightage coefficients to match dimensions of the audio frame in the frequency domain; and convolving the audio frame in the frequency domain and the interpolated and zero-padded plurality of weightage coefficients, by multiplication of the audio frame in the frequency domain and the interpolated and zero-padded plurality of weightage coefficients followed by application of inverse fast fourier transform, to obtain the spatial-spectral filtered single channel audio frame.

In yet another aspect, a non-transitory computer readable medium is provided. The non-transitory computer readable medium includes a plurality of instructions, which when executed, cause one or more hardware processors to: receive, via the communication interface, an input data comprising a) cursor coordinates indicating a selected location in a X/Y cartesian plane, of a pipe being monitored, b) one or more N-channel signals from an N-microphone circular array of window length in seconds, c) geometry of a target, d) a selected resolution of an acoustic imaging viewport, e) a frequency range of interest, and f) a band distance; convert the cursor coordinates to associated polar coordinate, based on the geometry of the target and the selected resolution of acoustic imaging, wherein the polar coordinates represent location in angles from a positive x-axis and a positive z-axis, and a distance from origin; perform a wideband beamforming to generate a composite acoustic map and a set of single frequency acoustic maps; identify a microphone from among a set of microphones in a microphone array, nearest to an angle of interest derived from generated polar coordinates, wherein the identified microphone that is nearest to the angle of interest captures maximum of a sound from an event of interest in the angle of interest; process a single channel audio frame from the identified microphone that is nearest to the angle of interest, using a light weight Delay Multiply and Sum (DMAS) algorithm, to generate a spatially filtered single channel audio frame; fuse the spatially filtered single channel audio frame with the set of single frequency acoustic maps, by frequency domain convolution of spatially filtered single channel audio frame with one or more interpolated and zero padded weightage coefficients from the single frequency acoustic maps at the cursor coordinates, to generate a spatial-spectral filtered single channel audio frame; and perform a target localization of the event of interest in the angle of interest by fusing the spatial-spectral filtered single channel audio frame with the composite acoustic map.

In an aspect of the non-transitory computer readable medium, the one or more hardware processors are configured to perform the wideband beamforming to generate the composite acoustic map and the set of single frequency acoustic maps by: shortening an N-channel audio frame from the N-microphone circular array from the start of a frame to generate the updated value window length, to reduce the computation time of the wideband beamforming; increasing the narrow bandwidth of each of the one or more narrow band pass filters centered at frequencies of the set of single frequency acoustic maps, to decrease the number of narrow band pass filters without changing a frequency range of the wideband beamforming; and reducing resolution of the acoustic imaging viewport along horizontal and vertical axes, to reduce the computation time of the wideband beamforming, retaining intelligibility of the acoustic map in the viewport, wherein the updated value window length, the decreased the number of narrow band pass filters, and the reduced resolution of the acoustic imaging viewport causes the wideband beamforming.

In another aspect of the non-transitory computer readable medium, the one or more hardware processors are configured to generate the spatially filtered single channel audio frame by: populating indices of k nearest microphones towards the angles of interest from the set of N microphones in the microphone array, wherein the k nearest microphones are found by projecting a unit vector directed at the angle of interest, upon a microphone array plane, scaled by a span of the microphone array; reducing an outer summation loop of the DMAS algorithm from N summations to k summations using a shortened N-channel audio frame and the reduced set of microphones k; obtain an envelope of the signal by passing the reduced outer summation loop through a Hilbert transform to remove a plurality of negative components in the signal; and generating the spatially filtered single channel audio frame based on the obtained envelope and the DMAS algorithm.

In another aspect of the non-transitory computer readable medium, the one or more hardware processors are configured to fuse the spatially filtered single channel audio frame with the set of single frequency acoustic maps comprises: transforming the spatially filtered single channel audio frame using a fast fourier transform to obtain an audio frame in a frequency domain; extracting a plurality of weightage coefficients corresponding to M central frequencies from a set of M single frequency acoustic maps; interpolating and zero-padding the plurality of weightage coefficients to match dimensions of the audio frame in the frequency domain; and convolving the audio frame in the frequency domain and the interpolated and zero-padded plurality of weightage coefficients, by multiplication of the audio frame in the frequency domain and the interpolated and zero-padded plurality of weightage coefficients followed by application of inverse fast fourier transform, to obtain the spatial-spectral filtered single channel audio frame.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for wideband beam forming based target localization, according to some embodiments of the present disclosure.
FIGS. 2A and 2B (collectively referred to as FIG. 2) is a flow diagram depicting steps involved in the process of wideband beam forming based target localization, using the system of FIG. 1, according to some embodiments of the present disclosure.
FIG. 3 is a flow diagram depicting steps involved in the process of generating composite acoustic map and a set of single frequency acoustic maps, by means of beamforming, using the system of FIG. 1, according to some embodiments of the present disclosure.
FIG. 4 is a flow diagram depicting steps involved in the process of generating a spatially filtered single channel audio frame, using the system of FIG. 1, according to some embodiments of the present disclosure.
FIG. 5 is a flow diagram depicting steps involved in the process of fusing the spatially filtered single channel audio frame with the set of single frequency acoustic maps, using the system of FIG. 1, according to some embodiments of the present disclosure.
FIG. 6 is a functional block diagram of the system of FIG. 1, for the wideband beam forming based target localization, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Industrial pipes are prone to external conditions resulting in leakage. Timely and accurate localization of such leakage becomes important, considering its implications on economic loss, environmental concerns, and public safety. Existing methods (viz. usage of pressure gauge) requires the engineer to bore the sensor into the pipe. This renders the installation and maintenance phases cumbersome. While easy-to install pipe leak sensing method exists (viz. accelerometer), sensor maintenance and in-situ inspection becomes arduous, if the pipe is at an inaccessible location. Accurate localization of leak event and the ability to differentiate leak and non-leak becomes an even more daunting challenge.

In order to address these challenges, embodiments disclosed herein provide a method and system for wideband beam forming based target localization. The system provides a lightweight spatio-temporal approach towards live monitoring of gas pipe, without compromising localization accuracy or intelligibility. The system provides an efficient array processing method at the edge, in terms of computation and communication costs. Instead of sending an entire multi-channel audio frames to a remote operator client, the system, which acts as an edge client a) processes the voluminous data, and b) transmits resulting lightweight acoustic map and spatially filtered audio to the operator for remote localization and diagnostics. A spatial filtering approach used by the system makes it easier for the operator to acoustically distinguish between leak and no-leak positions on the pipe.

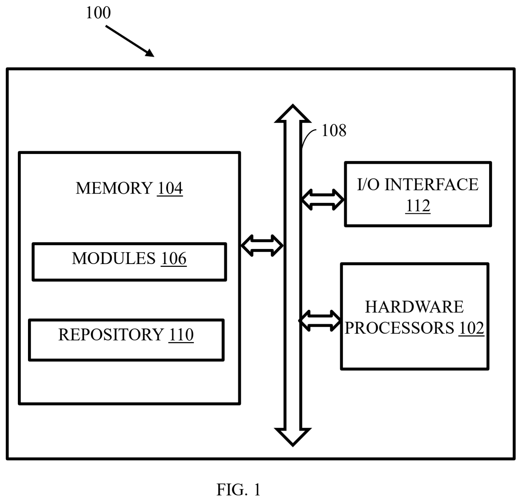

Referring now to the drawings, and more particularly to FIG. 1 through FIG. 6, where similar reference characters denote corresponding features consistently throughout the figures, there are shown preferred embodiments and these embodiments are described in the context of the following exemplary system and/or method.

FIG. 1 illustrates an exemplary system for wideband beam forming based target localization, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of wideband beam forming based target localization, being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the wideband beam forming based target localization.

The data repository (or repository) 110 may include a plurality of abstracted piece of code for refinement and data that is processed, received, or generated as a result of the execution of the plurality of modules in the module(s) 106.

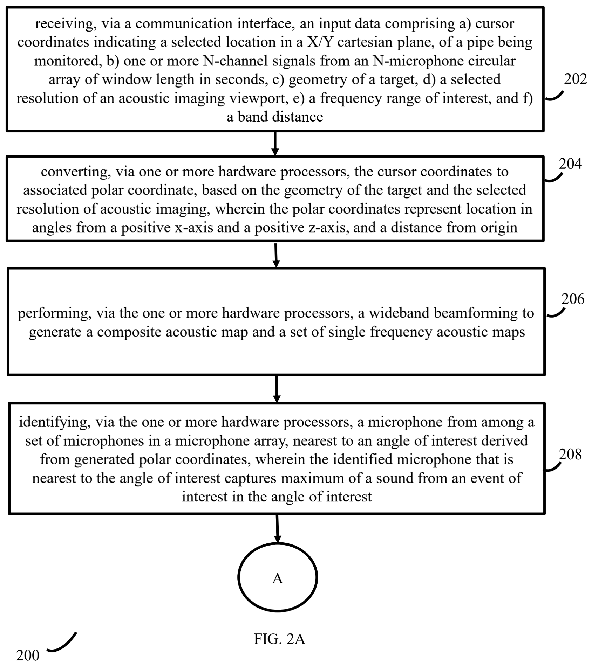

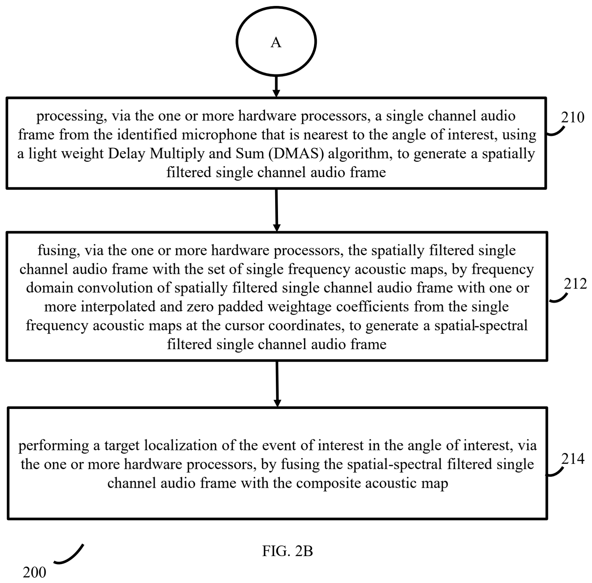

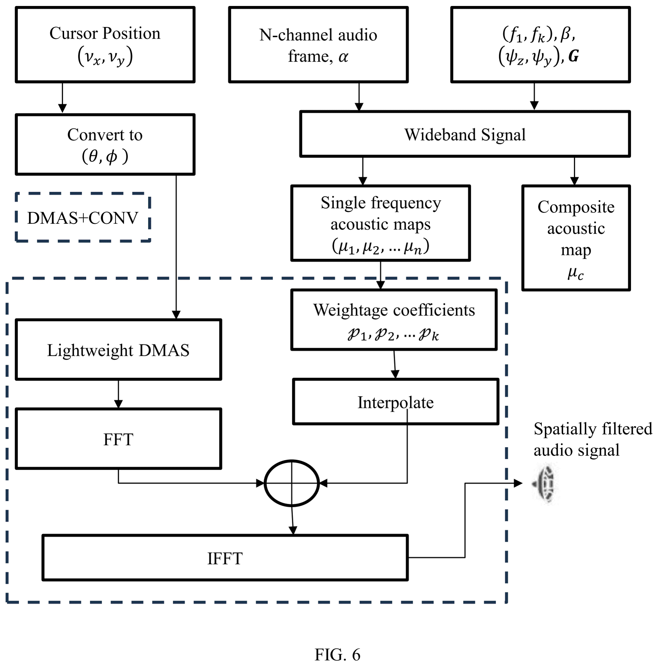

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagrams in FIGS. 2, 3, 4, and 5, and the functional block diagram in FIG. 6.

FIGS. 2A and 2B (collectively referred to as FIG. 2) is a flow diagram depicting steps involved in the process of wideband beam forming based target localization, using the system of FIG. 1, according to some embodiments of the present disclosure.

In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIGS. 2, 3, 4, and 5, and the functional block diagram in FIG. 6. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of method 200 in FIG. 2, the system 100 receives, via the communication interface 112, an input data comprising a) cursor coordinates indicating a selected location in a X/Y cartesian plane, of a pipe being monitored, b) one or more N-channel signals from an N-microphone circular array of window length in seconds, c) geometry of a target, d) a selected resolution of an acoustic imaging viewport, e) a frequency range of interest, and f) a band distance.

The geometry of the target refers to the geometry of a structure being monitored. For example, the structure maybe a pipe, and in this case the geometry of the pipe as a whole (diameter D, length L, height H) is known prior. In another scenario, if the structure being monitored is an engine, the geometry of the engine has to be known, which is being provided as input. In another scenario, if the aim is to look for some event of interest within an industrial machine (such as grinding mill, hydrocyclone, jaw crusher) generating some sound waves, such that the event of interest relates to some damage or fault to the aforementioned industrial machines, the geometry of the aforementioned industrial machine is received as one of the inputs.

The frequency range of interest is a frequency range within which adequate information about the event of interest can be obtained. For instance, if an observed acoustic sound source is narrow band in nature, associated frequency range is small. If the observed event is wideband in nature, the associated frequency range is comparatively larger. For example, a pipe leakage is a wideband phenomenon, where the leakage sound is spread over a wide frequency range. In another scenario, if the event of interest is impacts caused by some foreign objects on a machine of interest, which may damage the machine, sound of the impact is wideband in nature, and a frequency range of interest of this event may vary from that of pipe leakage. In another scenario, there may be a fault generated in an engine, which may cause a new wideband sound signature to be generated from a fault location. The frequency range of interest may be different in this case. In another scenario, if the sound observed is like a whistle, where a dominant frequency is present, it is narrowband in nature, and the frequency range is accordingly adjusted. In another scenario, if an industrial machine (such as grinding mill, hydrocyclone, jaw crusher) is being monitored for associated events of interest, such as some damage or fault, generating some sound waves, the frequency range of interest is set such that the event of interest is obtained satisfactorily within that frequency range of interest.

At step 204 of the method 200, the system 100 converts, via the one or more hardware processors 102, the cursor coordinates to associated polar coordinate, based on the geometry of the target and the selected resolution of acoustic imaging. The polar coordinates represent location in angles from a positive x-axis and a positive z-axis, and a distance from origin. Here, the term 'origin' refers to a point at centre of the microphone array, located upon the microphone array plane. At the origin, x axis passes through origin and a first mic of the microphone array (circular mic array in this case), y axis is 90 degree anticlockwise from the x axis, on the microphone array plane, passing through the origin, and z axis is perpendicular to the microphone array plane, passing through the origin. The microphone array plane is the plane where the top surfaces of all the microphones lie.

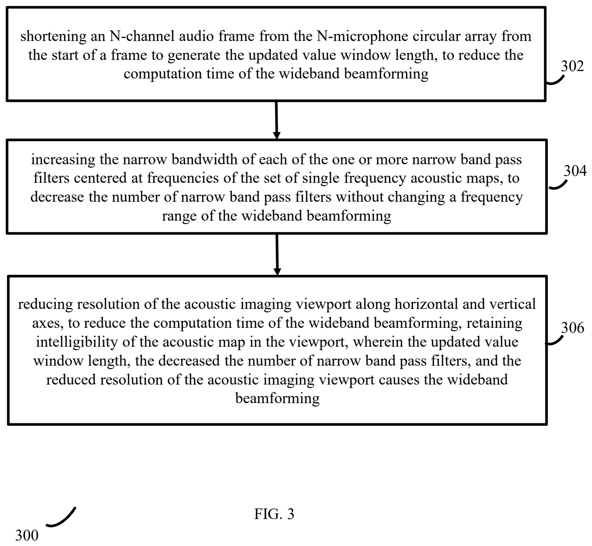

Further, at step 206 of the method 200, the system 100 performs, via the one or more hardware processors 102, a wideband beamforming. Steps involved in the process of wideband beamforming are depicted in method 300 in FIG. 3, and are explained hereafter. At step 302 of the method 300, the system 100 reduces, via the one or more hardware processors 102, the window length of the one or more N-channel signals to generate an updated value of window length. The window length is reduced to improve computation time, without loss of intelligibility for industrial sounds. In an embodiment, the updated value of window length is chosen such that computation is reduced while preserving the intelligibility of the audio frame. For example, for the target localization (alternately referred to as pipe leak localization), the window length value is reduced from 1 to 0.25. Further, at step 304 of the method 300, the system 100 generates, via the one or more hardware processors 102, one or more narrow band pass filters with a narrow bandwidth, based on the frequency range and the band distance. The narrow bandwidth β of each of the narrow band pass filters centered at frequencies B={F_1,F_2,...F_M}, within the frequency range [F_L,F_H] of wideband beamforming, is increased such that the number of narrow band pass filters M decreases, without changing the frequency range [F_L,F_H] of wideband beamforming. Decreasing the number of narrow band pass filters M reduces the computation time of wideband beamforming algorithm, while preserving the frequency range of interest [F_L,F_H]. *β* is increased such that the computation time is reduced without significant loss in accuracy. For example, β is increased from 100Hz to 400Hz which significantly reduced the computation time. Further, at step 306 of the method 300, the system 100 reduces resolution of an acoustic imaging viewport along horizontal and vertical axes, to reduce the computation time of the wideband beamforming, retaining intelligibility of the acoustic map in the viewport. For example, the resolution along the X and Y axes are reduced from (200,20) pixels to (50,5) pixels, which in turn reduces the computation time the wideband beamforming. The updated value window length, the decreased the number of narrow band pass filters, and the reduced resolution of the acoustic imaging viewport causes the wideband beamforming. The composite acoustic map with reduced resolution (in pixels) has less storage/transmission costs without significant loss in localization accuracy.

Further, at step 208 of the method 200, the system 100 identifies, via the one or more hardware processors 102, a microphone from among a set of microphones in a microphone array, nearest to an angle of interest derived from generated polar coordinates. The identified microphone that is nearest to the angle of interest captures maximum of a sound from an event of interest in the angle of interest. The term 'event of interest' may refer to a fault or a damage or any other characteristic, of the object being monitored. For example, if the object being monitored is a pipe, and the purpose of monitoring is leakage detection, then the event of interest is the pipe leakage, and the sound being captured by the microphone is sound from the pipe leakage. Further, from the microphone that is identified to be nearest to the angle of interest, a single channel audio frame is obtained.

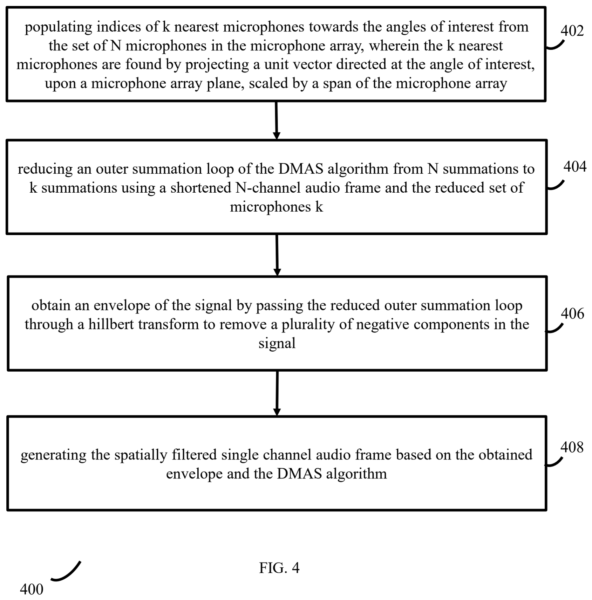

Further, at step 210 of the method 200, the system 100 processes, via the one or more hardware processors 102, the single channel audio frame from the identified microphone that is nearest to the angle of interest, using a light weight Delay Multiply and Sum (DMAS) algorithm, to generate a spatially filtered single channel audio frame. Various steps involved in the process of generating the spatially filtered single channel audio frame are depicted in method 400 in FIG. 4, and are explained hereafter.

At step 402 of the method 400, the system 100 populates indices of k nearest microphones towards the angles of interest from the set of N microphones in the microphone array. The k nearest microphones are found by projecting a unit vector directed at the angle of interest, upon a microphone array plane, scaled by a span of the microphone array. Further, at step 404 of the method 400, the system 100 reduces an outer summation loop of a Delay Multiply and Sum (DMAS) algorithm from N summations to k summations using a shortened N-channel audio frame and the reduced set of microphones k. This reduction in the outer summation loop reduces the computational complexity of DMAS algorithm from O(N^2) to O(N). Further, at step 406 of the method 400, the system 100 obtains an envelope of the signal by passing the reduced outer summation loop through a Hilbert transform to remove a plurality of negative components in the signal. Further, at step 408 of the method 400, the system 100 generates the spatially filtered single channel audio frame based on the obtained envelope and the DMAS algorithm. The spatially filtered single channel audio frame can be heard by human ear to differentiate a main sound source from any noise source in the surroundings with a lower amplitude. It can also be used to differentiate between the presence and absence of sound source of interest across the surface of the target, to an extent (depending on the ability of the user to detect minute amplitude/timbre variation by ear). The spatial filtering capability is provided with a reduced computation time, as compared to the conventional DMAS algorithm.

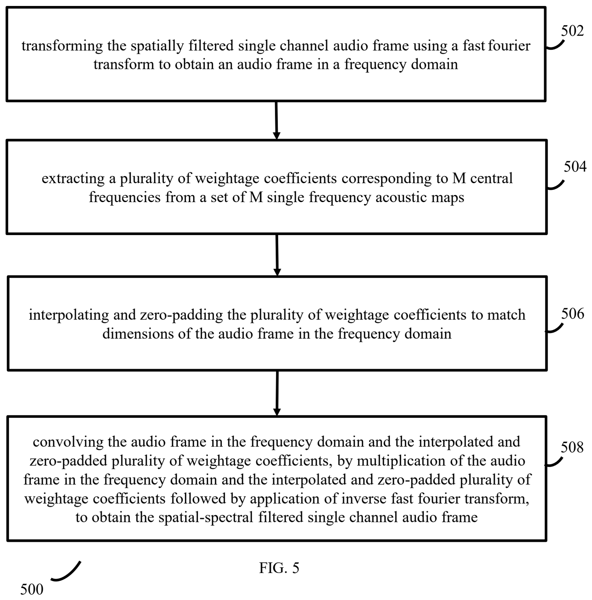

Further, at step 212 of the method 200, the system 100 fuses, via the one or more hardware processors 102, the spatially filtered single channel audio frame with the set of single frequency acoustic maps, by frequency domain convolution of spatially filtered single channel audio frame with one or more interpolated and zero padded weightage coefficients from the single frequency acoustic maps at the cursor coordinates, to generate a spatial-spectral filtered single channel audio frame. Various steps involved in the process of fusing the spatially filtered single channel audio frame with the set of single channel acoustic maps are depicted in method 500 in FIG. 5, and are explained hereafter. At step 502 of the method 500, the system 100 transforms the spatially filtered single channel audio frame using a fast fourier transform to obtain an audio frame in a frequency domain. Further, at step 504 of the method 500, the system 100 extracts a plurality of weightage coefficients corresponding to M central frequencies from a set of M single frequency acoustic maps. Further, at step 504 of the method 500, the system 100 interpolates and zero-padds the plurality of weightage coefficients to match dimensions of the audio frame in the frequency domain, to obtain to obtain interpolated and zero-padded weightage coefficients. Further, at step 506 of the method 500, the system 100 convolves the audio frame in the frequency domain and the interpolated and zero-padded plurality of weightage coefficients, by multiplication of the audio frame in the frequency domain and the interpolated and zero-padded plurality of weightage coefficients followed by application of inverse fast fourier transform, to obtain the spatial-spectral filtered single channel audio frame. The spatial-spectral filtered single channel audio frame facilitates enhanced granular diagnostics through playback of spatially, and spectrally filtered and enhanced audio, which facilitates enhanced distinction by ear between the presence or absence of sound source of interest over the target geometry. The spatial-spectral filtered single channel audio frame enhances the ability of the user to detect amplitude/timbre variation by ear, by amplifying the variation of the amplitude/timbre of the sound across the target geometry.

Further, at step 214 of the method 200, the system 100 performs the target localization of the event of interest in the angle of interest, via the one or more hardware processors 102, by fusing the spatial-spectral filtered single channel audio frame with the composite acoustic map. This approach serves as a multi-dimensional approach for target localization and diagnostics through an audio-visual experience to the user based on the user's cursor coordinate inputs, further facilitating spatial localization, combined with spatially and spectrally filtered audio based on user's cursor coordinates. This approach further facilitates spatial and spectral filtering of a playback audio, such that a target sound can be isolated from other unwanted sound sources in vicinity. This is achieved with low computation time, without significant loss in accuracy or intelligibility.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of In-situ monitoring of pipe leak, especially when the leakage is in an inaccessible location. The embodiment, thus provides a mechanism for wideband beam forming based target localization, wherein the target is the leakage in a pipe being monitored. Moreover, the embodiments herein further provide a mechanism of fusing the spatial-spectral filtered single channel audio frame with the composite acoustic map, for the target localization.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
receiving (202), via a communication interface, an input data comprising a) cursor coordinates indicating a selected location in a X/Y cartesian plane, of a pipe being monitored, b) one or more N-channel signals from an N-microphone circular array of window length in seconds, c) geometry of a target, d) a selected resolution of an acoustic imaging viewport, e) a frequency range of interest, and f) a band distance;
converting (204), via one or more hardware processors, the cursor coordinates to associated polar coordinate, based on the geometry of the target and the selected resolution of acoustic imaging, wherein the polar coordinates represent location in angles from a positive x-axis and a positive z-axis, and a distance from origin;
performing (206), via the one or more hardware processors, a wideband beamforming to generate a composite acoustic map and a set of single frequency acoustic maps, comprising:
shortening (302) an N-channel audio frame from the N-microphone circular array from the start of a frame to generate the updated value window length, to reduce the computation time of the wideband beamforming;
increasing (304) the narrow bandwidth of each of the one or more narrow band pass filters centered at frequencies of the set of single frequency acoustic maps, to decrease the number of narrow band pass filters without changing a frequency range of the wideband beamforming; and
reducing (306) resolution of the acoustic imaging viewport along horizontal and vertical axes, to reduce the computation time of the wideband beamforming, retaining intelligibility of the acoustic map in the viewport,
wherein the updated value window length, the decreased the number of narrow band pass filters, and the reduced resolution of the acoustic imaging viewport causes the wideband beamforming;
identifying (208), via the one or more hardware processors, a microphone from among a set of microphones in a microphone array,
nearest to an angle of interest derived from generated polar coordinates, wherein the identified microphone that is nearest to the angle of interest captures maximum of a sound from an event of interest in the angle of interest;
processing (210), via the one or more hardware processors, a single channel audio frame from the identified microphone that is nearest to the angle of interest, using a light weight Delay Multiply and Sum (DMAS) algorithm, to generate a spatially filtered single channel audio frame;
fusing (212), via the one or more hardware processors, the spatially filtered single channel audio frame with the set of single frequency acoustic maps, by frequency domain convolution of spatially filtered single channel audio frame with one or more interpolated and zero padded weightage coefficients from the single frequency acoustic maps at the cursor coordinates, to generate a spatial-spectral filtered single channel audio frame; and
performing (214) a target localization of the event of interest in the angle of interest, via the one or more hardware processors, by fusing the spatial-spectral filtered single channel audio frame with the composite acoustic map.

2. The processor implemented method as claimed in claim 1, wherein generating a spatially filtered single channel audio frame comprises:
populating (402) indices of k nearest microphones towards the angles of interest from the set of N microphones in the microphone array,
wherein the k nearest microphones are found by projecting a unit vector directed at the angle of interest, upon a microphone array plane, scaled by a span of the microphone array;
reducing (404) an outer summation loop of the DMAS algorithm from N summations to k summations using a shortened N-channel audio frame and the reduced set of microphones k;
obtain (406) an envelope of the signal by passing the reduced outer summation loop through a Hilbert transform to remove a plurality of negative components in the signal; and
generating (408) the spatially filtered single channel audio frame based on the obtained envelope and the DMAS algorithm.

3. The processor implemented method as claimed in claim 1, wherein fusing the spatially filtered single channel audio frame with the set of single frequency acoustic maps comprises:
transforming (502) the spatially filtered single channel audio frame using a fast fourier transform to obtain an audio frame in a frequency domain;
extracting (504) a plurality of weightage coefficients corresponding to M central frequencies from a set of M single frequency acoustic maps;
interpolating (506) and zero-padding the plurality of weightage coefficients to match dimensions of the audio frame in the frequency domain; and
convolving (508) the audio frame in the frequency domain and the interpolated and zero-padded plurality of weightage coefficients, by multiplication of the audio frame in the frequency domain and the interpolated and zero-padded plurality of weightage coefficients followed by application of inverse fast fourier transform, to obtain the spatial-spectral filtered single channel audio frame.

4. A system (100), comprising:
one or more hardware processors (102);
a communication interface (112); and
a memory (104) storing a plurality of instructions, wherein the plurality of instructions cause the one or more hardware processors to:
receive, via the communication interface, an input data comprising a) cursor coordinates indicating a selected location in a X/Y cartesian plane, of a pipe being monitored, b) one or
more N-channel signals from an N-microphone circular array of window length in seconds, c) geometry of a target, d) a selected resolution of an acoustic imaging viewport, e) a frequency range of interest, and f) a band distance;
convert the cursor coordinates to associated polar coordinate, based on the geometry of the target and the selected resolution of acoustic imaging, wherein the polar coordinates represent location in angles from a positive x-axis and a positive z-axis, and a distance from origin;
perform a wideband beamforming based on the geometry of the target to generate a composite acoustic map and a set of single frequency acoustic maps, by:
shortening an N-channel audio frame from the N-microphone circular array from the start of a frame to generate the updated value window length, to reduce the computation time of the wideband beamforming;
increasing the narrow bandwidth of each of the one or more narrow band pass filters centered at frequencies of the set of single frequency acoustic maps, to decrease the number of narrow band pass filters without changing a frequency range of the wideband beamforming; and
reducing resolution of the acoustic imaging viewport along horizontal and vertical axes, to reduce the computation time of the wideband beamforming,
retaining intelligibility of the acoustic map in the viewport, wherein the updated value window length, the decreased the number of narrow band pass filters, and the reduced resolution of the acoustic imaging viewport causes the wideband beamforming;
identify a microphone from among a set of microphones in a microphone array, nearest to an angle of interest derived from generated polar coordinates, wherein the identified microphone that is nearest to the angle of interest captures maximum of a sound from an event of interest in the angle of interest;
process a single channel audio frame from the identified microphone that is nearest to the angle of interest, using a light weight Delay Multiply and Sum (DMAS) algorithm, to generate a spatially filtered single channel audio frame;
fuse the spatially filtered single channel audio frame with the set of single frequency acoustic maps, by frequency domain convolution of spatially filtered single channel audio frame with one or more interpolated and zero padded weightage coefficients from the single frequency acoustic maps at the cursor coordinates, to generate a spatial-spectral filtered single channel audio frame; and
perform a target localization of the event of interest in the angle of interest, by fusing the spatial-spectral filtered single channel audio frame with the composite acoustic map.

5. The system as claimed in claim 4, wherein the one or more hardware processors are configured to generate the spatially filtered single channel audio frame by:
populating indices of k nearest microphones towards the angles of interest from the set of N microphones in the microphone array, wherein
the k nearest microphones are found by projecting a unit vector directed at the angle of interest, upon a microphone array plane, scaled by a span of the microphone array;
reducing an outer summation loop of the DMAS algorithm from N summations to k summations using a shortened N-channel audio frame and the reduced set of microphones k;
obtain an envelope of the signal by passing the reduced outer summation loop through a Hilbert transform to remove a plurality of negative components in the signal; and
generating the spatially filtered single channel audio frame based on the obtained envelope and the DMAS algorithm.

6. The system as claimed in claim 4, wherein the one or more hardware processors are configured to fuse the spatially filtered single channel audio frame with the set of single frequency acoustic maps by:
transforming the spatially filtered single channel audio frame using a fast fourier transform to obtain an audio frame in a frequency domain;
extracting a plurality of weightage coefficients corresponding to M central frequencies from a set of M single frequency acoustic maps;
interpolating and zero-padding the plurality of weightage coefficients to match dimensions of the audio frame in the frequency domain; and
convolving the audio frame in the frequency domain and the interpolated and zero-padded plurality of weightage coefficients, by multiplication of the audio frame in the frequency domain and the interpolated and zero-padded plurality of weightage coefficients followed by application of inverse fast fourier transform, to obtain the spatial-spectral filtered single channel audio frame.

7. One or more non-transitory machine-readable information storage mediums comprising one or more instructions which when executed by one or more hardware processors cause:
receiving, via the communication interface, an input data comprising a) cursor coordinates indicating a selected location in a X/Y cartesian plane,
of a pipe being monitored, b) one or more N-channel signals from an N-microphone circular array of window length in seconds, c) geometry of a target, d) a selected resolution of an acoustic imaging viewport, e) a frequency range of interest, and f) a band distance;
converting the cursor coordinates to associated polar coordinate, based on the geometry of the target and the selected resolution of acoustic imaging, wherein the polar coordinates represent location in angles from a positive x-axis and a positive z-axis, and a distance from origin;
performing a wideband beamforming based on the geometry of the target to generate a composite acoustic map and a set of single frequency acoustic maps, by:
shortening an N-channel audio frame from the N-microphone circular array from the start of a frame to generate the updated value window length, to reduce the computation time of the wideband beamforming;
increasing the narrow bandwidth of each of the one or more narrow band pass filters centered at frequencies of the set of single frequency acoustic maps, to decrease the number of narrow band pass filters without changing a frequency range of the wideband beamforming; and
reducing resolution of the acoustic imaging viewport along horizontal and vertical axes, to reduce the computation time of the wideband beamforming, retaining intelligibility of the acoustic map in the viewport, wherein the updated value window length, the decreased the number of narrow band pass filters, and the reduced resolution of the acoustic imaging viewport causes the wideband beamforming;
identifying a microphone from among a set of microphones in a microphone array, nearest to an angle of interest derived from generated polar coordinates, wherein the identified microphone that is nearest to the angle of interest captures maximum of a sound from an event of interest in the angle of interest;
processing a single channel audio frame from the identified microphone that is nearest to the angle of interest, using a light weight Delay Multiply and Sum (DMAS) algorithm, to generate a spatially filtered single channel audio frame;
fusing the spatially filtered single channel audio frame with the set of single frequency acoustic maps, by frequency domain convolution of spatially filtered single channel audio frame with one or more interpolated and zero padded weightage coefficients from the single frequency acoustic maps at the cursor coordinates, to generate a spatial-spectral filtered single channel audio frame; and
performing a target localization of the event of interest in the angle of interest, by fusing the spatial-spectral filtered single channel audio frame with the composite acoustic map.

8. The one or more non-transitory machine-readable information storage mediums as claimed in claim 7, wherein the one or more hardware processors are configured to generate the spatially filtered single channel audio frame by:
populating indices of k nearest microphones towards the angles of interest from the set of N microphones in the microphone array, wherein
the k nearest microphones are found by projecting a unit vector directed at the angle of interest, upon a microphone array plane, scaled by a span of the microphone array;
reducing an outer summation loop of the DMAS algorithm from N summations to k summations using a shortened N-channel audio frame and the reduced set of microphones k;
obtain an envelope of the signal by passing the reduced outer summation loop through a Hilbert transform to remove a plurality of negative components in the signal; and
generating the spatially filtered single channel audio frame based on the obtained envelope and the DMAS algorithm.

9. The one or more non-transitory machine-readable information storage mediums as claimed in claim 7, wherein the one or more hardware processors are configured to fuse the spatially filtered single channel audio frame with the set of single frequency acoustic maps by:
transforming the spatially filtered single channel audio frame using a fast fourier transform to obtain an audio frame in a frequency domain;
extracting a plurality of weightage coefficients corresponding to M central frequencies from a set of M single frequency acoustic maps;
interpolating and zero-padding the plurality of weightage coefficients to match dimensions of the audio frame in the frequency domain; and
convolving the audio frame in the frequency domain and the interpolated and zero-padded plurality of weightage coefficients, by multiplication of the audio frame in the frequency domain and the interpolated and zero-padded plurality of weightage coefficients followed by application of inverse fast fourier transform, to obtain the spatial-spectral filtered single channel audio frame.
